# DEMANDE DE BREVET EUROPEEN

(11) **EP 1 385 347 A1**
(43) Date de publication de la demande: **28.01.2004**
(21) Numéro de dépôt: 03291799.9
(22) Date de dépôt: 21.07.2003
(51) Int. Cl.: H04Q 7/32

(54) **Procédé pour restituer au moins un stimulus à un utilisateur d'un dispositif récepteur de signaux**

(30) Priorité: 22.07.2002 FR 0209404
(71) Demandeur: SAGEM S.A., 75015 Paris (FR)
(72) Inventeur: Dimech, Jean-Marc, 60240 Chaumont en Vexin (FR); Heurtaux, Frédéric, 13610 Le puy la Sainte Reparade (FR)
(74) Mandataire: Maillet, Alain

(57) **Abrégé**

Procédé pour restituer au moins un stimulus à un utilisateur d'un dispositif récepteur (RD) de signaux (Irs), lequel procédé inclut au moins :
. une étape de sélection et de lecture d'une première zone mémoire (MZ1i, pour i=1 à N) contenant un modèle (MDi) dudit stimulus.

Le procédé selon l'invention inclut en outre :
. une étape de mémorisation préalable, au sein d'une deuxième zone mémoire (MZ2j, pour j=1 à P), d'un autre modèle (MDj) dudit stimulus, et
. une étape de définition préalable d'un ordre de priorité entre lesdites zones mémoire (MZ1i et MZ2j), ledit ordre étant matérialisé par des indices de préférence attribués aux dites zones mémoire.

Ce procédé permet, en conférant à un dispositif récepteur une capacité à utiliser plusieurs zones mémoire pour mémoriser plusieurs modèles d'un même type de stimulus, de multiplier les sources possibles de tels modèles.

## Description

La présente invention concerne un procédé pour restituer au moins un stimulus à un utilisateur d'un dispositif récepteur de signaux, lequel stimulus est défini par un émetteur d'un tel signal au moyen d'au moins une information codée véhiculée par ledit signal, lequel procédé inclut au moins une étape de sélection et de lecture d'une première zone mémoire, incluse dans ledit récepteur et contenant un modèle dudit stimulus, lequel modèle est identifiable au moyen de ladite information codée.

De tels procédés sont couramment mis en oeuvre pour permettre à des utilisateurs de téléphones portables de communiquer entre eux, au moyen de stimuli audio ou vidéo prédéterminés et véhiculés par de courts messages, lesquels stimuli sont intrinsèquement porteurs d'une signification, pouvant par exemple exprimer plus efficacement qu'une chaîne de caractères une sensation de joie, de tristesse ou de perplexité ressentie par un émetteur d'un tel message, l'utilisateur d'un récepteur dudit message étant à même d'en comprendre intuitivement la signification dès son exposition au stimulus correspondant.

Un service d'échange d'informations contenues dans de courts messages au moyen de téléphones mobiles est défini dans une norme 3GPP TS 23.040. Ce type de services est connu sous l'appellation anglo-saxonne "Short Message Service", couramment abrégée au moyen du sigle SMS.

Selon un principe général défini dans cette norme, un signal véhiculant un stimulus ne contient pas un modèle décrivant ledit stimulus de manière exhaustive, comme une représentation spectrale d'une séquence sonore ou une trame d'une image, mais seulement une information définissant sous forme codée de quel modèle il s'agit. Par exemple, une image portant un numéro 1 correspond au modèle d'une image exprimant un thème "je suis content", une image portant un numéro 3 correspond au modèle d'une image exprimant un thème "je suis triste", etc., lesdites images pouvant en outre être animées ou non, en fonction du contenu du modèle, qui peut dans le cas d'une image animée contenir des trames de différentes images fixes à afficher en succession pour créer une impression de mouvement.

Le dispositif récepteur d'un tel signal est apte à identifier, parmi une pluralité de modèles préalablement mémorisés au sein de diverses zones mémoire, le modèle pertinent qui correspond à l'information codée véhiculée par ledit signal, et à reproduire le stimulus ainsi modélisé, par exemple en affichant une image sur un écran ou en émettant une séquence sonore au moyen d'un haut-parleur.

Un tel codage de modèles de symboles est avantageux en ce qu'il permet de limiter le volume de données échangées par des utilisateurs du service SMS, puisque, par exemple, un modèle complet d'une image fixe au format GIF représente un volume de données de plusieurs centaines d'octets, alors qu'il suffira généralement d'un octet pour définir sous forme codée l'identité d'un tel modèle.

Cependant un tel procédé de transmission ne permet intrinsèquement que la restitution de stimuli sous des formes préalablement mémorisées dans le dispositif récepteur, les modèles de ces stimuli ayant été définis par un fabricant dudit dispositif. Ainsi, chaque modèle exprimera un thème qui correspondra à la signification définie par le contenu de son information codée associée, mais pourra présenter des particularités différentes d'un dispositif récepteur à un autre, selon l'interprétation qui aura été faite par chaque fabriquant du thème considéré. Par exemple, dans une icône identifiée par une information codée portant le numéro 1 et représentant sous forme schématique l'image d'un visage souriant pour exprimer le thème "je suis content", les yeux pourront être pleins ou non, une ligne courbe représentant un sourire pourra être ou non agrémentée de fossettes à ses extrémités, etc.

Or, les utilisateurs de ce type de services sont très attachés au caractère personnel des messages qu'ils s'échangent et considèrent leur contenu comme reflétant une part de leur personnalité, particulièrement des contenus graphiques ou sonores qui sont représentatifs de leur créativité en tant que porteurs de signification. Ces utilisateurs préfèreraient donc que les stimulus restitués par le dispositif récepteur reproduise le modèle qu'ils auront eux-même choisi, plutôt qu'un modèle défini par un fabriquant du dispositif qui peut varier en fonction de l'identité de ce fabricant.

L'un des buts de la présente invention est de remédier à cet inconvénient, en proposant un procédé pour restituer des stimuli permettant de substituer aux modèles de stimuli définis par les fabricants de dispositifs récepteurs des modèles qui auront été définis par des utilisateurs de ces dispositifs ou par un opérateur d'un réseau de télécommunication auprès duquel lesdits utilisateurs auront souscrit un abonnement pour pouvoir bénéficier d'un service d'échange de courts messages.

En effet, un procédé conforme au paragraphe introductif est caractérisé selon l'invention en ce qu'il inclut en outre, en vue d'une exécution préalable :
. une étape de mémorisation, au sein d'au moins une deuxième zone mémoire, d'au moins un autre modèle dudit stimulus, lequel autre modèle est également identifiable au moyen de ladite information codée, et
. une étape de définition d'un ordre de priorité entre lesdites zones mémoire à respecter lors d'une exécution d'une étape de sélection de l'une desdites zones mémoire.

L'invention permet, en conférant à un dispositif récepteur une capacité à utiliser plusieurs zones mémoire pour mémoriser plusieurs modèles d'un même type de stimulus, de multiplier les sources possibles de tels modèles, et donc de rompre avec l'exclusivité de fourniture de tels modèles, dont le fabricant dudit dispositif a la charge dans l'état actuel de la technique. L'ordre de priorité défini préalablement à l'exécution d'une étape de sélection et de lecture indiquera à un dispositif dans lequel l'invention est mise en oeuvre quel modèle doit être pris en compte si deux modèles différents correspondant à une même information codée sont disponibles.

En particulier, différents modèles d'un même stimulus qui sont identifiables au moyen d'une même information codée pourront être mémorisés dans des zones mémoire incluses dans différents moyens de mémorisation physiquement distincts les uns des autres.

Le dispositif récepteur pourra par exemple contenir deux mémoires physiquement distinctes l'une de l'autre, l'une étant destinée à contenir dans un premier groupe de zones mémoire des modèles définis par le fabricant dudit dispositif, l'autre étant destinée à contenir dans un deuxième groupe de zones mémoire des modèles définis par un utilisateur dudit dispositif ou par un opérateur auprès duquel ledit utilisateur aura souscrit un abonnement.

Selon les modes de mise en oeuvre de l'invention choisis, l'ordre de priorité pourra être défini par l'utilisateur du dispositif récepteur ou par l'opérateur, voire par le fabricant dudit dispositif.

Selon un mode mise en oeuvre particulier de l'invention, l'ordre de priorité entre les zones mémoire sera matérialisé par des indices de préférence attribués aux dites zones mémoire.

Ce mode de mise en oeuvre particulier de l'invention permet de définir l'ordre de priorité sous une forme quantifiée et donc aisément traduisible sous forme numérique, ce qui permettra de simplifier l'exécution de l'étape de sélection.

L'étape de définition d'un ordre de priorité pourra en particulier inclure une sous-étape de mémorisation de chaque indice de préférence dans un champ de préférence propre à la zone mémoire à laquelle cet indice est attribué.

Ce champ de préférence propre à une zone mémoire pourra être inclus dans l'adresse de ladite zone mémoire.

Ainsi, il suffira au dispositif récepteur de passer en revue les adresses des diverses zones mémoire qu'il contient, sans en consulter le contenu, pour identifier celui des différents modèles du stimulus associé à l'information codée qui doit être retenu en priorité par rapport aux autres.

Chaque indice de préférence pourra par ailleurs être cumulativement ou alternativement mémorisé dans au moins une table destinée à répertorier une pluralité de zones mémoire.

Il suffira alors au dispositif récepteur de passer en revue le contenu de ladite table, sans effectivement passer en revue les adresses des zones mémoire qui sont répertoriées dans ladite table, pour identifier celui des différents modèles du stimulus associé à l'information codée qui doit être retenu en priorité par rapport aux autres.

Dans le cas où différents modèles d'un même stimulus qui sont identifiables au moyen d'une même information codée sont mémorisés dans des zones mémoire incluses dans différents moyens de mémorisation physiquement distincts les uns des autres, l'étape de définition d'un ordre de priorité des différentes zones mémoire pourra consister à définir un ordre dans lequel seront successivement scrutés les différents moyens de mémorisation lors de l'étape de sélection et de lecture, qui sera exécutée dès qu'une desdites zones mémoire aura été identifiée au moyen de l'information codée.

Un tel mode de mise en oeuvre de l'invention permettra de définir de manière générale l'ordre de priorité et évitera donc la mise en oeuvre de moyens spécifiques et relativement complexes dédiés à une recherche et à un examen d'indices de préférences tels ceux mentionnés plus haut.

Dans un cas particulier de ce mode de mise en oeuvre de l'invention, au moins un moyen de mémorisation sera avantageusement constitué par une mémoire solidaire d'un objet séparable du récepteur, qui aura été mis en contact avec ledit récepteur au cours d'une étape de connexion préalable à l'étape de sélection et de lecture.

Un tel objet séparable pourra être une carte à puce de type SIM ou micro-SIM, ou encore un bâtonnet mémoire de type Memory Stick.

Un tel objet séparable est usuellement fourni à l'utilisateur du dispositif récepteur par l'opérateur auprès duquel ledit utilisateur contracte un abonnement, ledit opérateur pouvant ainsi inscrire dans la mémoire implantée dans ledit objet des modèles qui seront définis de manière uniforme pour tous les utilisateurs abonnés à cet opérateur, de sorte qu'un de ces abonnés pourra être assuré que le stimulus qu'il émet vers un destinataire sera effectivement reproduit auprès de ce destinataire sous la forme que l'abonné émetteur aura choisie, indépendamment de l'identité du fabricant du dispositif récepteur du destinataire et du modèle correspondant qui aura été défini par ce fabricant.

Cependant, l'utilisateur du dispositif pourra avoir la capacité d'inscrire lui-même ses propres données, et donc de définir lui-même ses propres modèles de stimulus, dans la mémoire solidaire dudit objet séparable. Une telle inscription pourra être effectuée après connexion de ladite mémoire audit récepteur, via une interface entre ledit récepteur et ledit utilisateur, laquelle interface pouvant être tactile, visuelle ou sonore et mettre alors en oeuvre un clavier, un écran ou un microphone et un haut-parleur implantés dans le dispositif récepteur. Cette inscription pourra également être effectuée par l'utilisateur avant connexion de ladite mémoire au récepteur, par exemple au moyen d'un ordinateur personnel présentant habituellement une interface homme/machine plus conviviale que l'interface offerte par le dispositif récepteur.

Une inscription de données dans d'autres zones mémoires que la première zone mémoire, laquelle inscription permet de définir au moins un modèle de stimulus autre que le modèle défini par le fabricant du dispositif de réception dans laquelle l'invention est mise en oeuvre, peut en outre être exécutée à la seule initiative de l'opérateur auprès duquel l'utilisateur dudit dispositif aura souscrit un abonnement à un service permettant l'échange de courts messages. Dans un tel mode de mise en oeuvre de l'invention, un procédé tel que décrit plus haut inclura avantageusement, au sein de l'étape de mémorisation, une sous-étape de réception d'un signal contenant au moins ledit autre modèle dudit stimulus.

Ce mode de réalisation de l'invention permet une mise à jour systématique, et sans effort de la part de l'utilisateur du dispositif récepteur, du contenu d'une bibliothèque de modèles prédéfinis par l'opérateur de manière uniforme pour tous ses abonnés.

En tant qu'élément essentiel à ce mode de mise en oeuvre, l'invention concerne également un signal destiné à être reçu par le récepteur au cours d'une sous-étape de réception telle que décrite ci-dessus.

L'invention concerne en outre, selon l'un de ses aspects matériels, un dispositif récepteur de signaux apte à restituer au moins un stimulus à un utilisateur dudit dispositif, lequel stimulus est défini par un émetteur d'un tel signal au moyen d'au moins une information codée véhiculée par ledit signal, lequel dispositif inclut au moins :
. des moyens de sélection et de lecture d'une première zone mémoire, incluse dans ledit récepteur et contenant un modèle dudit stimulus, lequel modèle est identifiable au moyen de ladite information codée,
. dispositif caractérisé en ce qu'il inclut en outre :
   . au moins une deuxième zone mémoire, destinée à mémoriser au moins un autre modèle dudit stimulus, lequel autre modèle est également identifiable au moyen de ladite information codée, et
   . des moyens de définition d'un ordre de priorité entre lesdites zones mémoire à respecter lors d'une sélection de l'une desdites zones mémoire.

Selon un mode de réalisation particulier d'un tel dispositif, l'ordre de priorité entre les zones mémoire sera matérialisé par des indices de préférence attribués aux dites zones mémoire.

Chaque indice de préférence sera avantageusement destiné à être mémorisé dans un champ de préférence propre à la zone mémoire à laquelle cet indice est attribué.

Le champ de préférence propre à une zone mémoire pourra être inclus dans l'adresse de ladite zone mémoire.

Alternativement ou cumulativement, chaque indice de préférence pourra être mémorisé dans au moins une table destinée à répertorier une pluralité de zones mémoire.

Dans un mode de réalisation particulier d'un tel dispositif, différents modèles d'un même stimulus qui sont identifiables au moyen d'une même information codée seront mémorisés dans des zones mémoire incluses dans différents moyens de mémorisation physiquement distincts les uns des autres.

Les moyens de définition d'un ordre de priorité des différentes zones mémoire pourront alors définir un ordre dans lequel seront successivement scrutés les différents moyens de mémorisation par les moyens de sélection et de lecture, jusqu'à ce qu'une desdites zones mémoire soit identifiée au moyen de l'information codée.

Dans un mode de mise en oeuvre particulier de l'invention, au moins un moyen de mémorisation pourra être constitué par une mémoire solidaire d'un objet séparable du récepteur, destinée à être connectée avec ledit dispositif.

En tant que moyen essentiel pour ce mode de mise en oeuvre particulier, l'invention concerne ainsi également un objet portable dont est solidaire une mémoire destinée à être connectée avec un dispositif récepteur tel que décrit ci-dessus.

Par ailleurs, dans un autre mode de mise en oeuvre de l'invention, un dispositif récepteur tel que décrit plus haut pourra en outre inclure des moyens de réception d'un signal contenant ledit autre modèle dudit stimulus.

En tant que moyen essentiel pour cet autre mode de mise en oeuvre, l'invention concerne ainsi également un signal contenant un modèle de stimulus destiné à être reçu par un dispositif récepteur tel que décrit ci-dessus.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un schéma fonctionnel interne d'un dispositif récepteur dans lequel l'invention est mise en oeuvre, et
La Fig.2 est une vue extérieure schématique d'un tel dispositif

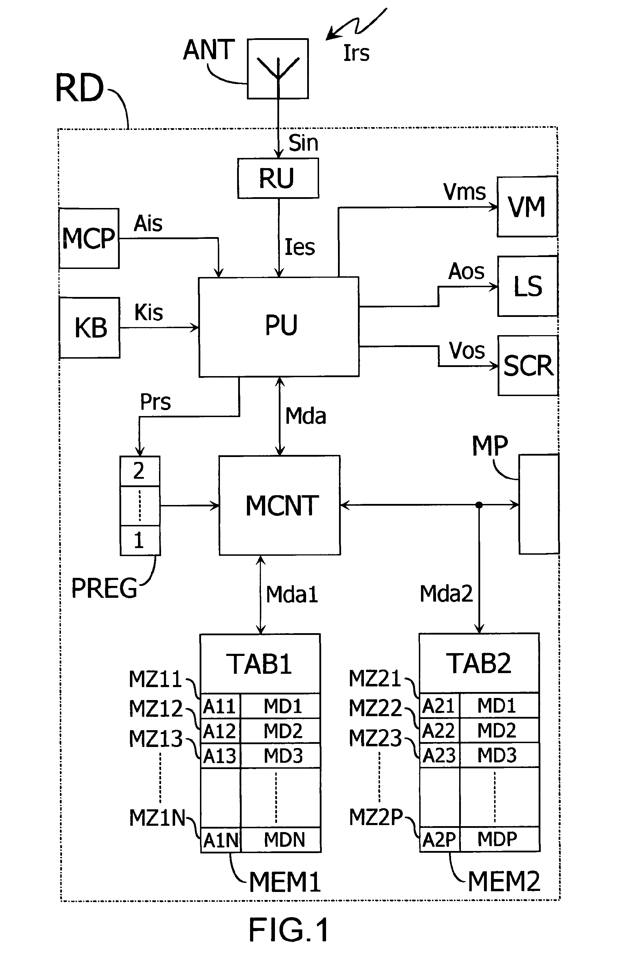

La Fig.1 représente sous forme hautement schématique un dispositif récepteur RD, qui pourra être par exemple un radiotéléphone conforme aux standards GSM, GPRS ou UMTS, ou encore un organiseur muni de fonctions de réception et optionnellement d'émission.

Ce dispositif récepteur RD inclut des moyens de réception d'un signal radio Irs, et est apte à restituer au moins un stimulus à un utilisateur dudit dispositif RD, lequel stimulus aura été défini par un émetteur dudit signal Irs au moyen d'au moins une information codée véhiculée par ledit signal Irs. Ce stimulus pourra être constitué par un son émis par un haut-parleur LS, une image affichée sur un écran SCR, ou une vibration générée par un moteur vibratoire VM, ou encore une combinaison de tels stimuli.

Ce dispositif récepteur RD inclut en outre des moyens de sélection et de lecture d'une première zone mémoire MZ1i (pour i=1 à N), matérialisés ici par un contrôleur de mémoire MCNT, chaque zone mémoire contenant un modèle d'un stimulus, lequel modèle est identifiable au moyen de ladite information codée. Dans l'exemple décrit ici, cette information codée est représentée par le nombre entier i de poids le moins significatif présent dans l'identifiant de chaque zone mémoire. L'ensemble de toutes les première zones mémoire MZ1i (pour i=1 à N), qui sont ici regroupées au sein d'une première mémoire MEM1, contient donc N modèles de N stimuli différents.

Dans ce dispositif récepteur RD, les moyens de réception comprennent une antenne ANT, apte à recevoir un signal radio Irs et à le transformer en un signal électronique d'entrée Sin. Ce signal d'entrée Sin sera transmis à une unité de traitement PU, via une unité de réception RU destinée à appliquer audit signal d'entrée Sin un filtrage et une conversion en fréquence et à produire un signal résultant les. L'unité de traitement PU identifiera alors le signal résultant Ies comme une requête de restitution d'un stimulus et extraira dudit signal résultant Ies l'information codée permettant l'identification du stimulus dont la restitution a été requise par l'émetteur du signal radio Irs. L'unité de traitement PU enverra alors aux moyens de sélection et de lecture matérialisés par le contrôleur de mémoire MCNT un flux de données mémoire Mda contenant ladite information codée et une requête aux fins de sélection et de lecture d'une zone mémoire contenant un modèle du stimulus correspondant. Les moyens de sélection et de lecture matérialisés par le contrôleur de mémoire MCNT fourniront en retour à l'unité de traitement PU un autre flux de données mémoire Mda qui contiendra par exemple une représentation spectrale d'un son à émettre ou une trame d'une image vidéo à afficher, ou encore une fréquence de vibration à générer. L'unité de traitement PU traduira ce flux de données mémoire en un ou plusieurs signaux de commande Vos, Aos ou Vms, respectivement, d'un écran SCR, d'un haut-parleur LS ou d'un moteur vibratoire VM, lesquels restitueront alors effectivement le stimulus conformément au modèle contenu dans les données mémoire Mda extraites par les moyens de sélection et de lecture matérialisés par le contrôleur de mémoire MCNT.

Dans ce mode de réalisation particulier de l'invention, le dispositif récepteur RD contient un ensemble de deuxièmes zones mémoire MZ2j (pour j= à P), qui sont ici regroupées au sein d'une deuxième mémoire MEM2 physiquement distincte de la première mémoire MEM1, lequel ensemble contient donc P modèles de P stimuli différents. Dans d'autres modes de réalisation de l'invention, toutes les premières zones mémoire et toutes les deuxièmes zones mémoire pourront être incluses dans une unique mémoire, dont des portions incluant les premières zones mémoires ne seront accessibles en écriture qu'au fabricant du dispositif récepteur RD, et dont des portions incluant les deuxièmes zones mémoires ne seront accessibles en écriture qu'à un utilisateur dudit dispositif récepteur RD

Un fabricant d'un dispositif récepteur RD tel celui décrit ici réalisera, au cours d'une des étapes de fabrication, une inscription du contenu de la première mémoire MEM1, et définira à cette occasion N modèles de N stimuli différents, correspondant chacun à une interprétation de N thèmes que ces stimuli sont censés exprimer. Avant de le mettre en service, un utilisateur du dispositif récepteur pourra lui aussi inscrire dans la deuxième mémoire P modèles de P stimuli différents, correspondant chacun à une interprétation, propre audit utilisateur, des P thèmes que ces stimuli sont censés exprimer.

L'utilisateur du dispositif récepteur RD pourra réaliser une telle inscription au moyen d'une interface constituée dans cet exemple par un clavier KB et un microphone MCP, qui permettent de générer des signaux de données Kis et Ais, lesquels seront envoyés via l'unité de traitement PU vers les moyens de sélection et de lecture MCNT sous la forme de données mémoire Mda, lesquels moyens de sélection et de lecture MCNT organiseront alors l'écriture de ces données dans la deuxième mémoire MEM2. L'interface homme/machine offerte par le dispositif récepteur RD étant usuellement peu conviviale dans le cas d'un dispositif portable, ce dispositif récepteur RD est en outre muni d'un port mémoire MP permettant un accès direct à la deuxième mémoire MEM2 via un bus qui pourra par exemple être conforme à un standard USB ou RS232. Ce port mémoire MP permettra alors à l'utilisateur du dispositif récepteur RD d'utiliser un matériel extérieur, comme un ordinateur personnel, pour définir ses propres modèles avec plus de souplesse et de précision, puis d'inscrire ces modèles directement dans la deuxième mémoire MEM2 sans passer par l'interface (KB, MCP) du dispositif récepteur RD.

Cette interface (KB, MCP) servira cependant avantageusement à l'utilisateur du dispositif récepteur RD pour définir un ordre de priorité entre plusieurs sources différentes de différents modèles d'un même stimulus, que les moyens de sélection et de lecture MCNT devront respecter lors d'une sélection d'une zone mémoire. Ainsi, des signaux Kis fournis par le clavier KB et/ou des signaux Ais fournis par le microphone MCP seront analysés par l'unité de traitement PU qui en déduira des données Prs représentatives de l'ordre de priorité défini par l'utilisateur au moyen du clavier KB et/ou du microphone MCP. Ces données seront mémorisées dans cet exemple de réalisation dans un registre de priorité PREG, que les moyens de sélection et de lecture matérialisés par le contrôleur de mémoire MCNT consulteront avant chaque opération de sélection et de lecture d'une zone mémoire.

Dans certains modes de mise en oeuvre de l'invention, il sera en outre également possible à un opérateur auprès duquel l'utilisateur du dispositif récepteur RD aura contracté un abonnement à un service de courts messages d'inscrire lui-même des modèles de stimuli dans des zones mémoire appartenant par exemple à la deuxième mémoire MEM2, ou à une troisième zone mémoire non-représentée ici. Le signal radio Irs contiendra alors une requête en écriture dans ladite mémoire, accompagnée d'une adresse d'une zone mémoire dans laquelle une telle écriture est souhaitée, et d'un modèle de stimulus correspondant. Ladite requête, après avoir transité au travers de l'unité de réception RU et de l'unité de traitement PU, sera alors transmise sous la forme d'un flux de données mémoire Mda aux moyens de sélection et de lecture matérialisés par le contrôleur de mémoire MCNT qui procéderont à la sélection de ladite zone mémoire et à une écriture, dans ladite zone mémoire, du modèle défini par l'opérateur. Un tel mode de mise en oeuvre de l'invention permettra une mise à jour systématique, et sans effort de la part de l'utilisateur du dispositif récepteur RD, du contenu d'une bibliothèque de modèles prédéfinis par l'opérateur de manière uniforme pour tous ses abonnés.

L'ordre de priorité est ici matérialisé par des indices de préférence 2 et 1 attribués aux diverses zones mémoire. Les premières zones mémoire MZ1i (pour i=1 à N) regroupées dans la première mémoire MEM1 auront un indice de préférence de valeur 1 et les deuxièmes zones mémoire MZ2j (pour j=1 à P) regroupées dans la deuxième mémoire MEM2 auront un indice de préférence de valeur 2. Les données contenues dans le registre de priorité PREG pourront par exemple exprimer une convention selon laquelle, plus la valeur d'un indice attribué à une certaine zone mémoire est grande, plus la priorité de ladite zone mémoire est haute. En d'autres termes, lorsqu'une première et une deuxième zone mémoire MZ1 et MZ2k contiendront des modèles différents d'un même stimulus identifiable au moyen du nombre entier k, les moyens de sélection et de lecture matérialisés par le contrôleur de mémoire MCNT déduiront d'une consultation du registre de priorité PREG que le contenu de la deuxième zone mémoire MZ2k doit être sélectionné en priorité pour en extraire des données Mda2. Cet ordre de priorité est dans cet exemple matérialisé par l'ordre dans lequel les chiffres 2 et 1 ont été inscrits dans le registre de priorité PREG. Le chiffre 2 est inscrit dans une partie du registre de priorité PREG contenant des bits de poids les plus significatifs, le chiffre 1 étant inscrit dans une partie du registre de priorité PREG contenant les bits de poids les moins significatifs. Si, dans un autre mode de mise en oeuvre de l'invention, il existe M sources de modèles avec M supérieur à 2, le registre de priorité contiendra avantageusement M chiffres représentant les indices de préférence attribués aux modèles provenant des différentes sources, lesquels indices seront rangés par ordre décroissant de priorité depuis les bits de poids les plus significatifs vers les bits de poids les moins significatifs.

Dans un cas où N>k>P, et si un modèle d'un certain stimulus n'est alors disponible que dans la première mémoire MEM1, les moyens de sélection et de lecture matérialisés par le contrôleur de mémoire MCNT scruteront en priorité la deuxième mémoire MEM2, et, après n'y avoir pas trouvé de modèle correspondant au nombre entier k, scruteront la première mémoire MEM1 et y sélectionneront la première zone mémoire MZ1 pour en extraire des données Mda1.

Pour faciliter les opérations de scrutation, l'indice de préférence sera mémorisé dans un champ de préférence propre à la zone mémoire à laquelle cet indice est attribué. En particulier, cet indice de préférence pourra constituer une partie de l'adresse de ladite zone mémoire, de sorte qu'il suffira aux moyens de sélection et de lecture matérialisés par le contrôleur de mémoire MCNT de passer en revue les adresses A1i (pour i=1 à N) et A2j (pour j=1 à P) des diverses zones mémoire MZ1i (pour i=1 à N) et MZ2j (pour j=1 à P) contenues dans le dispositif récepteur RD, sans en consulter le contenu, pour identifier celui des différents modèles du stimulus associé à l'information codée qui doit être retenu en priorité par rapport aux autres.

Chaque indice de préférence pourra par ailleurs être cumulativement ou alternativement mémorisé dans des première et deuxième tables TAB1 et TAB2 respectivement destinées à répertorier les zones mémoire MZ1i (pour i=1 à N) et MZ2j (pour j=1 à P) contenues dans les première et deuxième mémoires MEM1 et MEM2.

Il suffira alors aux moyens de sélection et de lecture matérialisés par le contrôleur de mémoire MCNT de passer en revue le contenu desdites tables TAB1 et TAB2 dans l'ordre de priorité défini par le contenu du registre de priorité PREG, c'est-à-dire que dans le présent exemple le contenu de la deuxième table TAB2 sera passé en revue avant celui de la première table TAB1, sans effectivement passer en revue les adresses des zones mémoire qui sont répertoriées dans chacune desdites tables, pour identifier celui des différents modèles du stimulus associé à l'information codée qui doit être retenu en priorité par rapport aux autres.

La deuxième mémoire MEM2 pourra, dans certaines applications, être solidaire d'un objet séparable du récepteur, lequel objet pourra par exemple être constitué par une carte à puce de type SIM ou micro-SIM, ou encore un bâtonnet mémoire de type Memory Stick. Dans le cas où l'objet séparable est une carte de type micro-SIM, la deuxième table TAB2 pourra être constituée par une table de services connue de l'homme du métier sous l'appellation anglo-saxonne "SIM service table", et les zones mémoire pourront être constituées par des fichiers connus de l'homme du métier sous l'appellation anglo-saxonne "Elementary Files", éventuellement regroupés au sein de répertoires "Data Fields" lorsque plusieurs modèles participent à la restitution d'un même stimulus comme plusieurs images fixes peuvent être successivement affichées pour restituer une image animée. Les tables, fichiers et répertoires évoqués ci-dessus sont définis dans une norme 3GPP TS 11.11 et ne seront donc pas décrits plus avant dans le cadre de cet exposé.

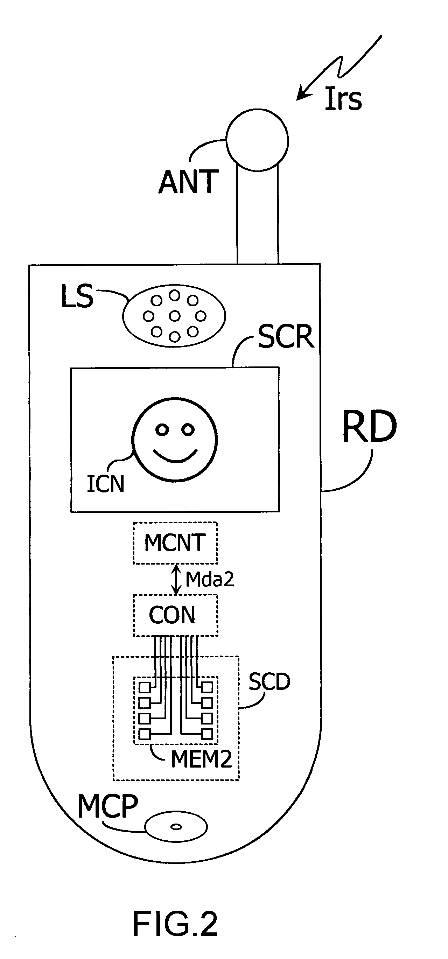

La Fig.2 est une représentation schématique d'un dispositif récepteur RD selon un mode de réalisation particulier de l'invention. Ce dispositif récepteur RD est ici un radiotéléphone, muni d'un écran SCR et d'un haut-parleur LS, respectivement destinés à restituer des stimuli vidéo et audio définis par un émetteur d'un signal radio Irs que le dispositif récepteur RD est apte à recevoir via des moyens de réception comprenant une antenne ANT. Dans l'exemple représenté ici, le stimulus restitué est visuel et matérialisé par une icône ICN, qui exprime un thème identifié par une information codée au moyen d'un nombre dont la valeur est 1, qui identifie le thème "Je suis content" selon la norme 3GPP TS 23.040 évoquée plus haut.

Dans ce mode de réalisation de l'invention, le modèle du stimulus restitué par le dispositif récepteur RD est extrait sous forme d'un flux de données mémoire Mda2 d'une mémoire MEM2 qui est solidaire d'un objet séparable du dispositif récepteur RD, en l'espèce une carte à puce SCD de type micro-SIM, et qui a été préalablement connectée, via un connecteur CON, aux moyens de sélection et de lecture matérialisés par le contrôleur de mémoire MCNT inclus dans ledit dispositif récepteur RD. Après réception d'une requête, aux fins de restitution dudit stimulus contenue dans le signal radio Irs, le dispositif récepteur RD aura prioritairement recherché dans ladite deuxième mémoire MEM2 un modèle dudit stimulus, qui aura été préalablement défini par un utilisateur dudit dispositif récepteur RD ou par un opérateur auprès duquel ledit utilisateur aura souscrit un abonnement, lequel modèle constituera une interprétation du thème "Je suis content" qui sera propre audit utilisateur ou audit opérateur et aura dû à ce titre être préféré au modèle défini par le fabricant dudit dispositif récepteur RD.

## Revendications

1. Procédé pour restituer au moins un stimulus à un utilisateur d'un dispositif récepteur de signaux, lequel stimulus est défini par un émetteur d'un tel signal au moyen d'au moins une information codée véhiculée par ledit signal, lequel procédé inclut au moins :
. une étape de sélection et de lecture d'une première zone mémoire, incluse dans ledit récepteur et contenant un modèle dudit stimulus, lequel modèle est identifiable au moyen de ladite information codée,
procédé **caractérisé en ce qu'**il inclut en outre, en vue d'une exécution préalable
. une étape de mémorisation, au sein d'au moins une deuxième zone mémoire, d'au moins un autre modèle dudit stimulus, lequel autre modèle est également identifiable au moyen de ladite information codée, et
. une étape de définition d'un ordre de priorité entre lesdites zones mémoire à respecter lors d'une exécution d'une étape de sélection de l'une desdites zones mémoire, ledit ordre de priorité étant matérialisé par des indices de préférence attribués aux dites zones mémoire.

2. Procédé selon la revendication 1, **caractérisé en ce que** l'étape de définition d'un ordre de priorité inclut une sous-étape de mémorisation de chaque indice de préférence dans un champ de préférence propre à la zone mémoire à laquelle cet indice est attribué.

3. Procédé selon la revendication 2, **caractérisé en ce que** le champ de préférence propre à une zone mémoire est inclus dans l'adresse de ladite zone mémoire.

4. Procédé selon l'une des revendications 1 à 3, **caractérisé en ce que** chaque indice de préférence est mémorisé dans au moins une table destinée à répertorier une pluralité de zones mémoire.

5. Procédé selon la revendication 1, **caractérisé en ce que** différents modèles d'un même stimulus qui sont identifiables au moyen d'une même information codée sont mémorisés dans des zones mémoire incluses dans différents moyens de mémorisation physiquement distincts les uns des autres.

6. Procédé selon la revendication 5, **caractérisé en ce que** l'étape de définition d'un ordre de priorité des différentes zones mémoire consiste à définir un ordre dans lequel seront successivement scrutés les différents moyens de mémorisation lors de l'étape de sélection et de lecture, qui sera exécutée dès qu'une desdites zones mémoire aura été identifiée au moyen de l'information codée.

7. Procédé selon l'une des revendications 5 ou 6, **caractérisé en ce qu'**au moins un moyen de mémorisation est constitué par une mémoire solidaire d'un objet séparable du récepteur, qui aura été mis en contact avec ledit récepteur au cours d'une étape de connexion préalable à l'étape de sélection et de lecture.

8. Procédé selon la revendication 1, **caractérisé en ce que** l'étape de mémorisation inclut une sous-étape de réception d'un signal contenant ledit autre modèle dudit stimulus.

9. Signal contenant un modèle de stimulus destiné à être reçu par le récepteur au cours d'une sous-étape de réception dans un procédé selon la revendication 8.

10. Dispositif récepteur de signaux apte à restituer au moins un stimulus à un utilisateur dudit dispositif, lequel stimulus est défini par un émetteur d'un tel signal au moyen d'au moins une information codée véhiculée par ledit signal, lequel dispositif inclut au moins :
. des moyens de sélection et de lecture d'une première zone mémoire, incluse dans ledit récepteur et contenant un modèle dudit stimulus, lequel modèle est identifiable au moyen de ladite information codée,
dispositif **caractérisé en ce qu'**il inclut en outre :
. au moins une deuxième zone mémoire, destinée à mémoriser au moins un autre modèle dudit stimulus, lequel autre modèle est également identifiable au moyen de ladite information codée, et
. des moyens de définition d'un ordre de priorité entre lesdites zones mémoire à respecter lors d'une sélection de l'une desdites zones mémoire, ledit ordre de priorité étant matérialisé par des indices de préférence attribués aux dites zones mémoire.

11. Dispositif selon la revendication 10, **caractérisé en ce que** chaque indice de préférence est destiné à être mémorisé dans un champ de préférence propre à la zone mémoire à laquelle cet indice est attribué.

12. Dispositif selon la revendication 11, **caractérisé en ce que** le champ de préférence propre à une zone mémoire est inclus dans l'adresse de ladite zone mémoire.

13. Dispositif selon l'une des revendications 10 à 12, **caractérisé en ce que** chaque indice de préférence est mémorisé dans au moins une table destinée à répertorier une pluralité de zones mémoire.

14. Dispositif selon la revendication 10, **caractérisé en ce que** différents modèles d'un même stimulus qui sont identifiables au moyen d'une même information codée sont mémorisés dans des zones mémoire incluses dans différents moyens de mémorisation physiquement distincts les uns des autres.

15. Dispositif selon la revendication 14, **caractérisé en ce que** les moyens de définition d'un ordre de priorité des différentes zones mémoire sont destinés à définir un ordre dans lequel seront successivement scrutés les différents moyens de mémorisation par les moyens de sélection et de lecture, jusqu'à ce qu'une desdites zones mémoire soit identifiée au moyen de l'information codée.

16. Dispositif selon l'une des revendications 14 ou 15, **caractérisé en ce qu'**au moins un moyen de mémorisation est constitué par une mémoire solidaire d'un objet séparable du récepteur, destinée à être connectée avec ledit dispositif.

17. Dispositif selon l'une des revendications 10 à 16, **caractérisé en ce qu'**il inclut des moyens de réception d'un signal contenant ledit autre modèle dudit stimulus.

18. Signal contenant un modèle de stimulus destiné à être reçu par un dispositif selon la revendication 17.

19. Objet portable dont est solidaire une mémoire destinée à être connectée avec un dispositif selon la revendication 16.
